# EUROPÄISCHE PATENTSCHRIFT

(11) **EP 1 843 452 B1**
(45) Veröffentlichungstag und Bekanntmachung des Hinweises auf die Patenterteilung: **24.04.2013**
(21) Anmeldenummer: 07105098.3
(22) Anmeldetag: 28.03.2007
(51) Int. Cl.: H02K 5/14, H02K 23/18

(54) **Kohlehaltervorrichtung**
Brush holder device
Dispositif de porte-balai

(30) Priorität: 06.04.2006 DE 102006000161
(43) Veröffentlichungstag der Anmeldung: 10.10.2007
(73) Patentinhaber: HILTI Aktiengesellschaft, 9494 Schaan (LI)
(72) Erfinder: Dorner, Stefan, 87600 Kaufbeuren (DE)
(74) Vertreter: Wildi, Roland

(56) Entgegenhaltungen:
- EP-A1- 0 329 249
- EP-A2- 0 208 137
- EP-A2- 0 778 655
- WO-A-03/038974
- GB-A- 2 166 008
- US-A- 5 089 729
- US-A- 6 124 652

## Beschreibung

Die Erfindung betrifft einen elektrischen Motor mit einer Kohlehaltervorrichtung, mittels der eine Drehrichtung des elektrischen Motors umgekehrt werden kann. Diese weist einen gegenüber einem Stator des Motors in eine Rechts-Laufstellung und eine Links-Laufstellung verdrehbaren Bürstenträger auf. An diesem sind zwei Kohleführungen vorgesehen, die in beiden Laufstellungen über eine Schaltanordnung mit einer Statorwicklung elektrisch verbunden sind. Die Schaltanordnung weist Schaltkontaktmittel auf, die in der Rechts-Laufstellung und der Links-Laufstellung unterschiedliche Kontaktierungen ausbilden. Somit wird beim Umschalten zwischen den beiden Laufstellungen gleichzeitig eine Umpolung des Motors bewirkt. Die Schaltanordnung ist hierzu durch den Bürstenträger betätigt.

Derartige Kohlehaltervorrichtungen ermöglichen durch die unterschiedliche Drehposition des Bürstenträgers in der Rechts- und Linkslaufstellung jeweils eine optimierte Kommutierung. Gleichzeitig findet beim Wechseln zwischen den beiden Laufstellungen mittels einer veränderten Kontaktierung zwischen den Schaltkontaktmitteln eine Umpolung des Motors statt.

Aus der EP 03 29 249 A1 ist eine Kohlehaltevorrichtung bekannt, bei der die Schaltkontaktmittel zwei Kontaktstreifen aufweisen, die fest am Statorgehäuse gehalten sind. Diese bilden jeweils zwei gebogene Enden aus, von denen in beiden Laufstellungen jeweils eines in eine von zwei Kammern des Bürstenträgers eingreift, um einen elektrischen Kontakt mit einer darin angeordneten Kohleführung herzustellen.

Nachteilig an den durch die Kontaktstreifen gebildeten Schaltkontaktmitteln ist dabei, dass diese offen an der Kohlehaltevorrichtung angeordnet sind und dadurch Verschmutzung und Verschleiss ausgeliefert sind, was wiederum zu einem Kontaktbrand und einem Ausfall des betreffenden Gerätes führen kann.

Aus der EP 0 778 655 A2 ist eine Vorrichtung zur Verstellung der Kohlebürsten für einen reversiblen Elektromotor, insbesondere für ein Elektrohandwerkzeug bekannt. Die Vorrichtung besteht aus einem verschwenkbaren Träger und einer ortsfesten Kontaktplatte. Am Träger sind Bürstenhalter für die auf dem Kollektor des Elektromotors schleifenden Kohlebürsten und mit den Kohlebürsten in elektrischer Verbindung stehende Schaltkontakte angeordnet. Die Kontaktplatte dient zur Aufnahme von Festkontakten, die mit den Feldwicklungen des Elektromotors in Verbindung stehen. Die Festkontakte wirken mit den Schaltkontakten als Gegenkontakte in einer wechselweisen Kontaktierung der Kohlebürsten zur Drehrichtungsumkehr des Elektromotors bei Verschwenkung des Trägers zusammen. Die Bürstenhalter sind derart auf dem Träger angeordnet, dass eine Fläche der Bürstenhalter der Kontaktplatte zugewandt ist. Ein Teil dieser Fläche ragt in den Bereich der Festkontakte in der Kontaktplatte als Schaltkontakt zur direkten Kontaktierung mit den Festkontakten hinein.

Der vorliegenden Erfindung liegt die Aufgabe zugrunde, bei einer Kohlehaltevorrichtung die genannten Nachteile zu vermeiden und die elektrischen Schaltkontaktmittel besser zu schützen.

Die Aufgabe wird durch die Merkmale des unabhängigen Anspruchs 1 gelöst. Hierdurch ist ein besonders guter Schutz der Schaltkontaktmittel gegen Verschmutzung und Verschleiss gegeben. Ausserdem können die Schaltkontaktmittel besonders gut gegenüber der übrigen Kohlehaltevorrichtung und den daran im Betrieb auftretenden Verschmutzungen verschlossen werden, während beim Verdrehen des Bürstenträgers gleichzeitig eine sichere Umpolung des Motors gewährleistet ist.

Vorteilhafterweise weist der Schalter ein Schaltglied auf, das durch den Bürstenträger in zwei Schaltpositionen verbringbar ist. Hierdurch kann für beide Laufstellungen die erforderliche Kontaktierung der Schaltkontaktmittel zuverlässig eingestellt werden.

Dabei ist es günstig, wenn der Schalter durch einen handelsüblichen Fahnenschalter und das Schaltglied durch dessen Schaltfahne gebildet ist, wodurch eine kostengünstige Herstellung der Kohlehaltervorrichtung möglich ist.

Bevorzugterweise weist der Bürstenträger ein Betätigungselement auf, mittels dem das Schaltglied betätigbar ist. Durch die Ausbildung eines derartigen Betätigungselementes kann eine besonders zuverlässige und exakte Betätigung des Schaltgliedes und des Schalters insgesamt sichergestellt werden.

Vorteilhafterweise ist das Betätigungselement durch eine Handhabe des Bürstenträgers gebildet, über die dieser von ausserhalb des betreffenden Gerätes zwischen den Laufstellungen verstellbar ist. Eine derartige Handhabe ragt in der Regel radial von einem Grundkörper des Bürstenträgers ab und ist dadurch neben dem Verdrehen des Bürstenträgers auch besonders geeignet, um das Schaltglied mit den erforderlichen Schaltkräften zum Umschalten des Schalters zu beaufschlagen.

Ferner ist es besonders günstig, wenn zwischen den bürstenseitigen Schaltkontaktmitteln und den Kohleführungen durch Leiter, beispielsweise in Form von Litzen, gebildete elektrische Verbindungen vorgesehen sind. Hierdurch können die bürstenseitigen Schaltkontaktmittel und damit auch die gesamte Schaltanordnung weitestgehend beliebig positioniert werden. Dabei ist gleichzeitig eine zuverlässige elektrische Verbindung zwischen den Kohleführungen beziehungsweise den Kohlebürsten und den bürstenseitigen Schaltkontaktmitteln gewährleistet.

In einer besonders vorteilhaften Ausführungsform ist der Schalter am Stator gehalten. Hierdurch ist bei sicherer Lagerung des Schalters eine einfache Betätigung desselben durch den Bürstenträger möglich. Hierbei erfolgt mit Verdrehen des Bürstenträgers gegenüber dem Stator eine entsprechende Relativbewegung des Schaltgliedes gegenüber dem übrigen Schalter, was eine exakt synchrone Umpolung des Motors mit der Umschaltung zwischen den Laufstellungen ermöglicht.

Die Erfindung wird nachstehend anhand eines Ausführungsbeispieles näher erläutert. Es zeigen:
- Fig. 1: eine Seitenansicht eines Motors mit einer erfindungsgemässen Kohlehaltervorrichtung und
- Fig. 2: eine Draufsicht auf die Kohlehaltervorrichtung in Richtung II aus Fig. 1. und
- Fig. 3: eine Draufsicht gesehen in Richtung III in Fig. 1 auf einen Schalter der Kohlehaltervorrichtung ohne Motor.

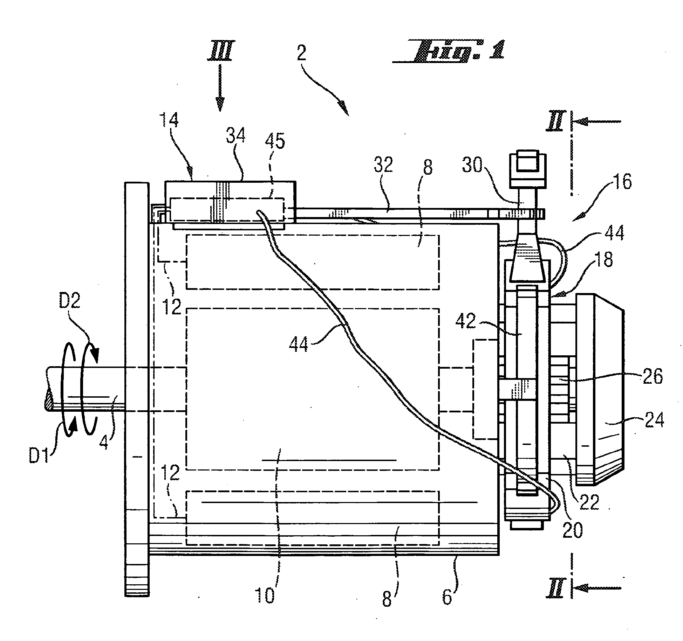

Fig. 1 zeigt einen Motor 2 in Form eines Universalmotors für ein elektrisches Handwerkzeuggerät, der über eine Motorwelle 4 eine nicht dargestellte Werkzeugaufnahme in einer ersten Drehrichtung D1 oder einer zweiten Drehrichtung D2 antreibt. Der Motor 2 weist in einem Statorgehäuse 6 einen Stator 8 und einen Rotor 10 auf. Eine nicht näher dargestellte Statorwicklung ist dabei über zwei elektrische Statorverbindungen 12 mit einem Schalter 14 in Form eines handelsüblichen Fahnenschalters verbunden, der am Statorgehäuse 6 befestigt ist.

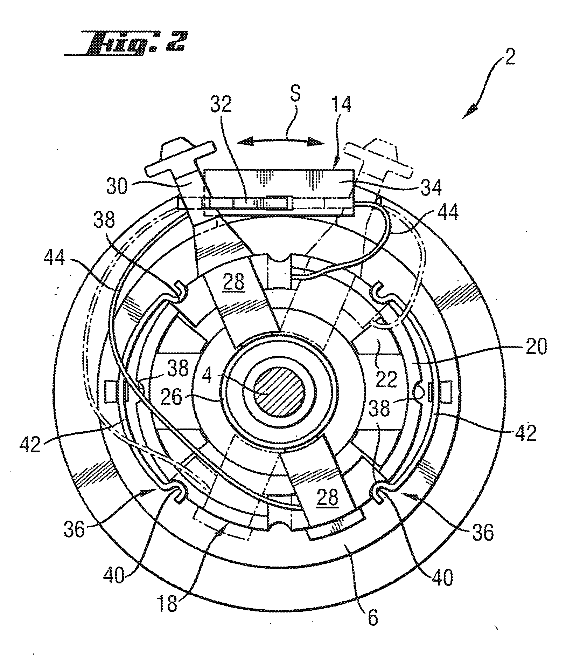

An einem Ende des Statorgehäuses 6 ist eine insgesamt mit 16 bezeichnete Kohlehaltervorrichtung vorgesehen. Diese weist einen Bürstenträger 18 mit einem ringförmigen Grundkörper 20 auf, der in eine Schwenkrichtung S (siehe Fig. 2) verdrehbar auf gehäusefesten Lagerdornen 22 gehalten ist, die einen Lagerbock 24 tragen. Der Lagerbock 24 dient dabei zur Lagerung der Motorwelle 4 an einem Ende, an dem ein Kommutator 26 des Motors 2 angeordnet ist.

Wie insbesondere aus Fig. 2 zu entnehmen ist, weist der Bürstenträger 18 zwei Kohleführungen 28 zur Aufnahme und Führung von nicht näher dargestellten Kohlebürsten sowie eine vom Grundkörper 20 radial abstehende Handhabe 30 auf. Diese Handhabe 30 dient zur Verstellung des Bürstenträgers 18 in Schwenkrichtung S zwischen einer in Fig. 2 dargestellten Rechtslaufstellung und einer Links-Laufstellung, die durch strichpunktierte Linien dargestellt ist. Die Handhabe 30 kann hierzu von ausserhalb eines nicht dargestellten Gerätegehäuses betätigt werden.

Gleichzeitig dient die Handhabe 30 als Betätigungselement für den Schalter 14. Hierzu ist die Handhabe 30 mit einem Schaltglied 32 des Schalters 14 gekoppelt, das durch eine Schaltfahne gebildet ist. Das Schaltglied 32 ragt dabei aus einem Schaltergehäuse 34 des Schalters 14 heraus und umgreift teilweise die Handhabe 30. Alternativ hierzu kann die Handhabe 30 auch eine Aufnahme für das Schaltglied 32 aufweisen. In jedem Fall ist das Schaltglied 32 mit der Handhabe 30 gekoppelt und durch Verschwenken derselben in zwei Schaltpositionen verbringbar, die der Rechts-Laufstellung und der Links-Laufstellung des Bürstenträgers 18 entsprechen.

Zwischen dem Statorgehäuse 6 und dem Bürstenträger 18 sind ferner insgesamt mit 36 bezeichnete Rastmittel vorgesehen, die die Kohleführungen 28 sicher in der jeweils ausgewählten Laufstellung halten, die so vorbestimmt ist, dass sowohl im Rechtslauf als auch im Linkslauf eine möglichst optimale Kommutierung erzielt wird. Die Rastmittel 36 umfassen hierzu beispielhaft mehrere in den Bürstenträger 18 eingelassene Rastaufnahmen 38, die in der Links-Laufstellung oder der Rechts-Laufstellung mit entsprechend positionierten Rastnasen 40 zweier an dem Statorgehäuse 6 gehaltener Federelemente 42 verrasten.

Mit der Festlegung des Bürstenträgers 18 in einer der beiden Laufstellungen wird dabei gleichzeitig auch eine der beiden Schaltpositionen des Schaltgliedes 32 beziehungsweise des Schalters 14 gesichert.

Wie ferner zu entnehmen ist, ist der Schalter 14 über jeweils einen elektrischen Leiter 44 in Form einer Litze mit den Kohleführungen 28 elektrisch verbunden, wodurch der Schalter 14 gegenüber dem Bürstenträger 18 nahezu frei positionierbar ist.

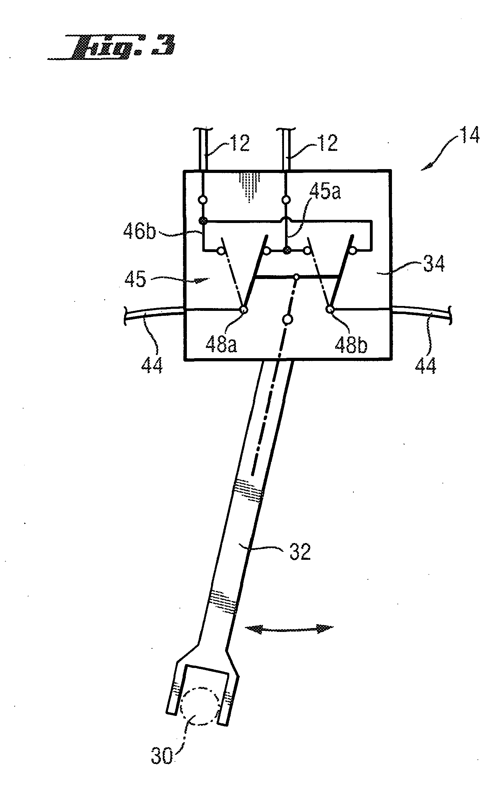

Die Funktionsweise des Schalters 14 wird gemäss Fig. 3 erläutert. Wie hieraus zu entnehmen ist, ist in dem Schaltergehäuse 34 eine, schematisch dargestellte, gegenüber Aussen nahezu vollständig gekapselte Schaltanordnung 45 aufgenommen. Dabei weist das Schaltergehäuse 34 lediglich in den Bereichen Ausnehmungen (nicht dargestellt) auf, in denen die elektrischen Statorverbindungen 12, die Leiter 44 und das Schaltglied 32 einbeziehungsweise austreten. Zum besserer Verschliessen des Schaltergehäuses 34 gegen Aussen können an diesen Ausnehmungen entsprechende konstruktive Massnahmen oder zusätzliche Dichtmittel vorgesehen werden.

Die Schaltanordnung 45 weist ein erstes statorseitiges Schaltkontaktmittel 46a und ein zweites statorseitiges Schaltkontaktmittel 46b, die mit den elektrischen Statorverbindungen 12 verbunden sind, sowie ein erstes bürstenseitiges Schaltkontaktmittel 48a und ein zweites bürstenseitiges Schaltkontaktmittel 48b, die mit den Leitern 44 verbunden sind, auf. In der dargestellten Schaltposition, die der Rechts-Laufstellung des Bürstenträgers 18 entspricht, wird dabei das erste statorseitige Schaltkontaktmittel 46a mit dem ersten bürstenseitigen Schaltkontaktmittel 48a und das zweite statorseitige Schaltkontaktmittel 46b mit dem zweiten bürstenseitigen Schaltkontaktmittel 48b verbunden.

In der strichpunktiert dargestellten Schaltposition, die der Links-Laufstellung des Bürstenträgers 18 entspricht, wird dagegen das erste statorseitige Schaltkontaktmittel 46a mit dem zweiten bürstenseitigen Schaltkontaktmittel 48b und das zweite statorseitige Schaltkontaktmittel 46b mit dem ersten bürstenseitigen Schaltkontaktmittel 48a verbunden.

Diese unterschiedlichen Kontaktierungen in den beiden Schaltpositionen führt beim Verschwenken des Bürstenträgers 18 zwischen den beiden Laufstellungen zu einer Umpolung des Motors und damit zu einem jeweiligen Wechsel der Motordrehrichtung.

## Patentansprüche

1. Elektrischer Motor (2) mit einer Kohlehaltervorrichtung (16) zur Drehrichtungsumkehr,
die einen gegenüber einem Stator (8) des Motors (2) in eine Rechts-Laufstellung und eine Links-Laufstellung verdrehbaren Bürstenträger (18) aufweist, an dem zwei Kohleführungen (28) vorgesehen sind, die über eine Schaltanordnung (45) in beiden Laufstellungen mit dem Stator (8) elektrisch verbindbar sind, die statorseitige Schaltkontaktmittel (46a, 46b) und bürstenseitige Schaltkontaktmittel (48a, 48b) aufweist, die zur Umpolung des Motors (2) in der Rechts-Laufstellung und der Links-Laufstellung unterschiedliche Kontaktierungen ausbilden,
wobei die Schaltanordnung (45) über den Bürstenträger (18) verstellbar ist,
**dadurch gekennzeichnet, dass** die Schaltkontaktmittel (46a, 46b; 48a, 48b) gegenüber der Kohlehaltervorrichtung (16) gekapselt und dazu
in einem Schaltergehäuse (34) eines Schalters (14) aufgenommen sind, der durch den Bürstenträger (18) betätigbar ist.

2. Motor nach Anspruch 1, **dadurch gekennzeichnet, dass** der Schalter (14) ein Schaltglied (32) aufweist, das über den Bürstenträger (18) in zwei Schaltpositionen verbringbar ist.

3. Motor nach Anspruch 2, **dadurch gekennzeichnet, dass** der Schalter (14) durch einen Fahnenschalter und das Schaltglied (32) durch dessen Schaltfahne gebildet ist.

4. Motor nach Anspruch 2 oder 3, **dadurch gekennzeichnet, dass** der Bürstenträger (18) ein Betätigungselement aufweist, mittels dem das Schaltglied (32) betätigbar ist.

5. Motor nach Anspruch 4, **dadurch gekennzeichnet, dass** das Betätigungselement durch eine Handhabe (30) des Bürstenträgers (18) gebildet ist, über die dieser zwischen den Laufstellungen verstellbar ist.

6. Motor nach einem der Ansprüche 1 bis 5, **dadurch gekennzeichnet, dass** zwischen den bürstenseitigen Schaltkontaktmitteln (48a, 48b) und den Kohleführungen (28) durch Leiter (44) gebildete elektrische Verbindungen vorgesehen sind.

7. Motor nach einem der Ansprüche 1 bis 6, **dadurch gekennzeichnet, dass** der Schalter (14) am Stator (8) gehalten ist.

## Claims

1. Electric motor (2) with a carbon holder device (16) for reversing the direction of rotation,
said carbon holder device comprising a brush-holder support (18) rotatable relative to a stator (8) of the motor (2) into a clockwise running position and into an anti-clockwise running position and provided with two carbon guides (28) which can be electrically connected to the stator (8) in both running positions by means of a switching arrangement (45) and which comprise switching contact means (46a, 46b) on the stator side and switching contact means (48a, 48b) on the brush side producing differing contact in the clockwise running position and in the anti-clockwise running position in order to reverse the polarity of the motor (2),
wherein the switching arrangement (45) can be adjusted by means of the brush-holder support (18),
**characterised in that** the switching contact means (46a, 46b; 48a, 48b) are enclosed relative to the carbon holder device (16) and are to this end received in a housing (34) of a switch (14) that can be actuated by the brush-holder support (18).

2. Motor according to claim 1, **characterised in that** the switch (14) comprises a switching element (32) that can be moved into two switching positions by means of the brush-bolder support (18).

3. Motor according to claim 2, **characterised in that** the switch (14) is formed by a flag switch and the switching element (32) is formed by the switching flag thereof.

4. Motor according to claim 2 or claim 3, **characterised in that** the brush-holder support (18) comprises an actuating element by means of which the switching element (32) can be actuated.

5. Motor according to claim 4, **characterised in that** the actuating element is formed by a handle (30) of the brush-holder support (18) by means of which it can be adjusted between the running positions.

6. Motor according to one of claims 1 to 5, **characterised in that** electrical connections formed by conductors (44) are provided between the switching contact means (48a, 48b) on the brush side and the carbon guides (28).

7. Motor according to one of claims 1 to 6, **characterised in that** the switch (14) is held on the stator (8).

## Revendications

1. Moteur électrique (2) comportant un dispositif porte-charbon (16) pour inverser un sens de rotation,
lequel moteur comporte un porte-balai (18) pouvant tourner par rapport à un stator (8) du moteur (2) dans une position de rotation à gauche et une position de rotation à droite, sur lequel sont prévus deux guides de balai de charbon (28) qui peuvent être électriquement reliés au stator (8) par l'intermédiaire d'un agencement de commutation (45) dans les deux positions de rotation, lequel agencement de commutation comporte des moyens de contact de commutation (46a, 46b) côté stator et des moyens de contact de commutation (48a, 48b) côté balais qui produisent différents contacts dans la position de rotation à droite et dans la position de rotation à gauche pour inverser la polarité du moteur (2),
dans lequel l'agencement de commutation (45) peut être réglé par l'intermédiaire du porte-balai (18),
**caractérisé en ce que** les moyens de contact de commutation (46a, 46b ; 48a, 48b) sont encapsulés par rapport au dispositif porte-charbon (16) et **en ce qu'**ils sont reçus dans un boîtier de commutateur (34) d'un commutateur (14) qui peut être actionné par le porte-balai (18).

2. Moteur selon la revendication 1, **caractérisé en ce que** le commutateur (14) comporte un élément de commutation (32) qui peut être amené dans deux positions de commutation par l'intermédiaire du porte-balai (18).

3. Moteur selon la revendication 2, **caractérisé en ce que** le commutateur (14) est formé par un commutateur à cosse et l'élément de commutation (32) est formé par sa cosse de commutation.

4. Moteur selon la revendication 2 ou 3, **caractérisé en ce que** le porte-balai (18) comporte un élément d'actionnement qui peut être actionné au moyen de l'élément de commutation (32).

5. Moteur selon la revendication 4, **caractérisé en ce que** l'élément d'actionnement est formé par une manette (30) du porte-balai (18) par l'intermédiaire de laquelle le porte-balai (18) peut être réglé entre les positions de rotation.

6. Moteur selon l'une quelconque des revendications 1 à 5, **caractérisé en ce que** des connexions électriques formées par des conducteurs (44) sont prévues entre les moyens de contact de commutation côté balais (48a, 48b) et les guides de balai de charbon (28).

7. Moteur selon l'une quelconque des revendications 1 à 6, **caractérisé en ce que** le commutateur (14) est maintenu sur le stator (8).
